# EUROPEAN PATENT APPLICATION

(11) **EP 4 534 480 A2**
(43) Date of publication of application: **09.04.2025**
(21) Application number: 24199037.3
(22) Date of filing: 06.09.2024
(51) Int. Cl.: C01B 32/956, C04B 35/575, C04B 35/628, C04B 41/00, C04B 41/45, C04B 41/87, C04B 41/89

(54) **THERMAL SPRAY POWDER AND COATED ARTICLE**

(30) Priority: 12.09.2023 US 202318465259
(71) Applicant: RTX Corporation, Farmington, CT 06032 (US)
(72) Inventor: ALIDOOST, Jalil, Farmington, 06032 (US); BEALS, James T., Farmington, 06032 (US); SPAETH, Andrew, Farmington, 06032 (US)
(74) Representative: Dehns

(57) **Abstract**

A thermal spray powder includes composite powder particles (74) that each have a silicon carbide core (78) and a multi-layered shell (80) that surrounds the core (78). The shell (80) includes at least one layer of silica (84) and at least one layer of alumina (82). The powder is used to deposit a mullite-based topcoat on a ceramic matrix composite wall of an article.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Components in the turbine section are typically formed of superalloys and may include thermal barrier coatings to extend temperature capability and lifetime. Ceramic matrix composite ("CMC") materials are also being considered for such components. Among other attractive properties, CMCs have high temperature resistance. Despite this attribute, however, there are unique challenges to implementing CMCs in gas turbine engine components.

### SUMMARY

A thermal spray powder according to an example of the present disclosure includes composite powder particles, each of the composite powder particles including a silicon carbide core and a shell surrounding the silicon carbide core. The shell is multi-layered and includes at least one layer of silica and at least one layer of alumina.

In a further example of the foregoing, the at least one layer of silica and the at least one layer of alumina are in an alternating arrangement.

In a further example of the foregoing, the at least one layer of silica and the at least one layer of alumina each have individual thicknesses of up to 10 nanometers.

In a further example of the foregoing, the silicon carbide core has a core diameter of 10 to 100 micrometers.

In a further example of the foregoing, a molar ratio of a number of moles of alumina in the at least one layer of alumina to a number of moles of silica in the at least one silica layer is approximately 1.5.

In a further example of the foregoing, a molar ratio of a number of moles of alumina in the at least one layer of alumina to a number of moles of silica in the at least one silica layer is approximately 2.

In a further example of the foregoing, the at least one layer of alumina defines a first thickness, the at least one layer of silica defines a second thickness, and a ratio of the first thickness to the second thickness is 7:3.

In a further example of the foregoing, the at least one layer of alumina defines a first thickness, the at least one layer of silica defines a second thickness, and a ratio of the first thickness to the second thickness is 8.

A gas turbine engine article according to an example of the present disclosure includes a ceramic matrix composite (CMC) wall having an interface region, a silicon-containing bondcoat on the CMC wall in the interface region, and a topcoat on the silicon-containing bondcoat, the topcoat including a mullite matrix and silicon carbide particles dispersed through the mullite matrix.

In a further example of any of the foregoing, the topcoat has a composition, by weight percentage of the total weight of the topcoat, of 60 +/- 15% of the silicon carbide particles and 40 +/- 15% of the mullite matrix.

In a further example of any of the foregoing, the topcoat is in contact with the silicon bondcoat, and the silicon bondcoat is in contact with the CMC wall.

In a further example of any of the foregoing, the mullite matrix has a chemical formula 3Al₂O₃ 2SiO₂.

In a further example of any of the foregoing, the mullite matrix has a chemical formula 2Al₂O₃ SiO₂.

In a further example of any of the foregoing, the silicon carbide particles have a diameter of 10 to 100 micrometers.

In a further example of any of the foregoing, the gas turbine engine article is in a turbine section of a gas turbine engine that also includes a compressor section and a combustor in fluid communication with the compressor section.

In a further example of any of the foregoing, the topcoat is in contact with the silicon bondcoat, and the silicon bondcoat is in contact with the CMC wall.

In a further example of any of the foregoing, the topcoat has a composition, by weight percentage of the total weight of the topcoat, of 60 +/- 15% of the silicon carbide particles and 40 +/- 15% of the mullite matrix.

In a further example of any of the foregoing, the mullite matrix has a chemical formula 3Al₂O₃ 2SiO₂.

In a further example of any of the foregoing, the mullite matrix has a chemical formula 2Al₂O₃ SiO₂.

In a further example of any of the foregoing, the silicon carbide particles have a diameter of 10 to 100 micrometers.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a representative portion of a gas turbine engine article.
Figure 3 illustrates a topcoat from the article.
Figure 4 illustrates a composite powder particle for depositing the topcoat by thermal spray.

In this disclosure, like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

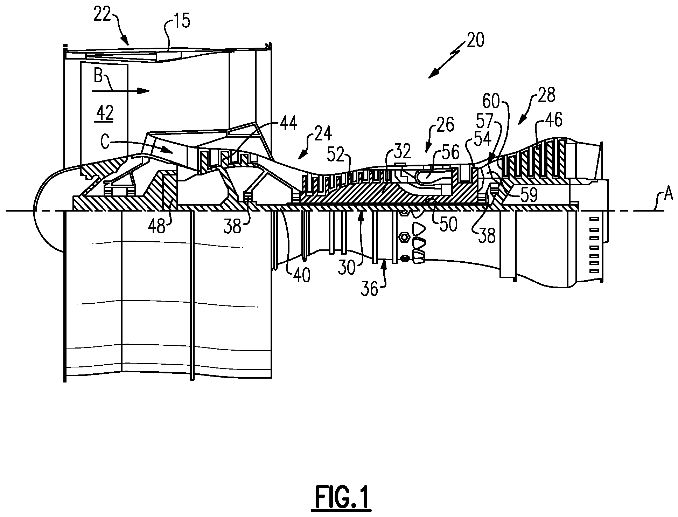

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

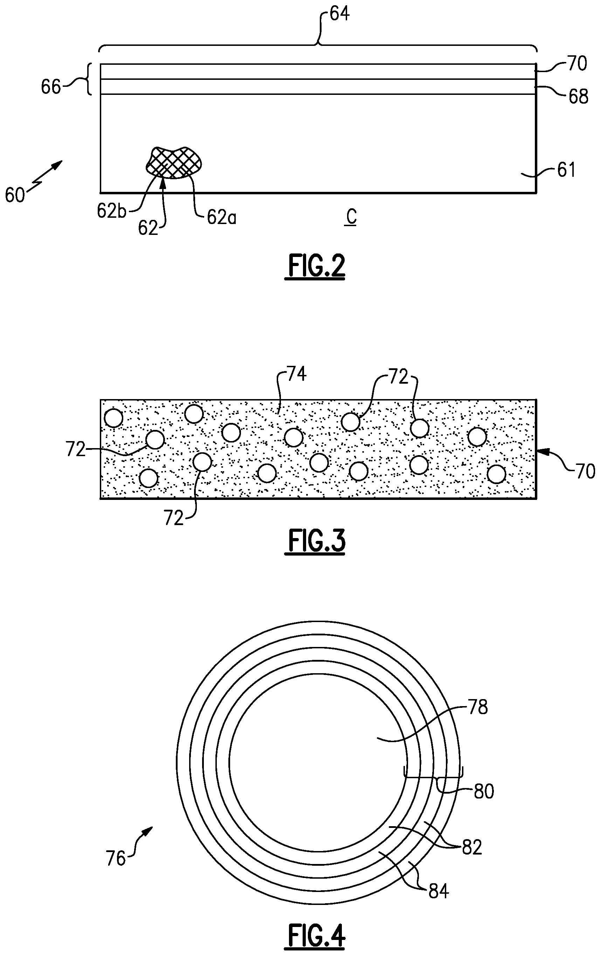

Figure 2 illustrates a representative portion of a gas turbine engine article 60 from the turbine section 28 of the engine 20. For example, the article 60 is, but is not limited to, a turbine vane, a turbine blade, or an outer air seal.

The article 60 has an article wall 61 that is formed of a ceramic matrix composite (CMC) 62. Referring to the cutaway portion in Figure 2, the CMC 62 includes ceramic fiber tows 62a that are disposed in a ceramic matrix 62b. In one example, the CMC 62 is, but is not limited to, a SiC/SiC composite in which SiC fibers are disposed within a SiC matrix. The ceramic fiber tows 62a are provided in fiber plies that are woven or braided and may collectively include plies of different fiber weave configurations.

The article 60 includes an interface region 64. The interface region 64 is a location on the article 60 that does not face into the core gaspath C of the engine 20 and at which the article 60 is to interface with another component, such as but not limited to, a seal (e.g., a feather seal) or an adjacent blade, vane, or mating. In this example, the interface region 64 is located on a side of the article 60 opposite the core gaspath C.

The surfaces of the CMC 62 are coarse in comparison to surfaces that are typical of superalloy engine components. For instance, there are localized undulations on the surface of the CMC 62 from the ceramic fiber tows 62a. For instance, troughs from one tow to the next create a series of lower and higher regions that are replicated on the surface in the conformal matrix 62b. Such coarseness provides a poor surface for sealing against, as the mating component typically cannot conform to the undulations and thus leaves leak paths. In this regard, the article 60 includes a coating system 66 that serves to (i) smooth over the undulations in the interface region 64 to provide a smooth surface for good sealing with the mating component, (ii) provide thermal protection of the underlying CMC wall 61 (e.g., up to operating temperatures of around 1260°C), and (iii) resist interacting with nickel (thermo-chemically stable), which is present in the mating component.

The coating system 66 is multilayered and at least includes a bondcoat 68 and a topcoat 70. The bondcoat 68 is in contact with the wall 61 and is intermediate to the topcoat 70, which is the outermost layer from the wall 61. The bondcoat 68 serves to facilitate adherence of the topcoat 70 to the wall 61. For example, the bondcoat 68 is formed of a silicon-containing material. In one example, the bondcoat 68 is pure silicon.

The topcoat 70 provides the thermal protection, but is also machinable in order to provide a smooth surface for sealing and is thermo-chemically stable with nickel. For example, the topcoat 70 is made of a mullite-containing material (mullite 3Al₂O₃ 2SiO₂ or 2Al₂O₃ SiO₂), which provides the requisite properties.

While pure mullite has the desired properties above, it has now also been recognized that differences in the coefficients of thermal expansion (CTE) in the coating system 66 and with the CMC 62 should be minimized in order to reduce thermally induced stresses and thereby facilitate enhanced durability of the coating system 66 to resist thermal cycling. Thus, although pure mullite provides the desired functional properties, its CTE is considerably different from the bondcoat 68 and underlying CMC 62. In this regard, as shown in Figure 3, the topcoat 70 includes silicon carbide particles 72 that serve to modify the CTE of the overall topcoat 70 to "match" the CTEs of the bondcoat 68 and CMC 62. For example, the bondcoat 68 and the topcoat 70 both have a CTE of 4.0 x 10-6 °C⁻¹ to 4.5 x 10-6 °C⁻¹.

The silicon carbide particles 72 are dispersed through a mullite matrix 74. In one example, the topcoat 70 has a composition, by weight percentage of the total weight of the topcoat 70, of 60 +/- 15% of the silicon carbide particles 72 and 40 +/-15% of the mullite matrix 74. The silicon carbide particles 72 have a diameter of 10 to 100 micrometers, such as 50 to 100 micrometers or 10 to 40 micrometers. In one example, the mullite matrix 74 has a chemical formula 3Al₂O₃ 2SiO₂ with a plate-like microstructure, and in another example the mullite matrix 74 has a chemical formula 2Al₂O₃ SiO₂ with a needle-like microstructure. The CTE of the topcoat 70 can be tailored to more closely match the CTE of a given bondcoat 68 through selection of the size and density of the silicon carbide particles 72.

With respect to fabrication, the topcoat 70 is deposited by air plasma spray (APS). A challenge, however, is that silicon carbide particles are not compatible with APS due to thermal decomposition at processing temperatures. In order to mitigate this incompatibility, composite powder particles 76 are used, a representative one of which is depicted in Figure 4.

Each composite powder particle 76 includes a silicon carbide core particle 78 and multi-layered shell 80 surrounding the silicon carbide core particle 78. The shell 80 serves to thermally shield the silicon carbide core particle 78 during APS processing and thereby permits the silicon carbide core particle 78 to be deposited onto the bondcoat 68 without decomposition of the silicon carbide.

The shell 80 includes at least one layer of alumina 82 and at least one layer of silica 84. In the illustrated example, the shell 80 includes two layers of alumina 82 and two layers of silica 84 in an alternating arrangement. In further examples, the shell 80 includes four, six, eight, or ten layers of each of the alumina 82 and the silica 84. In the APS process, the layers 82/84 melt and form the mullite matrix 74. The alternating of the layers 82/84 facilitates intermixing of the silica and alumina to form the mullite. The silicon carbide core particles 78 are shielded by the shell 80 and thus remain solid throughout the APS processing such that in the topcoat 70 the silicon carbide particles 72 are substantially the same size and same shape as in the powder particle 76 (e.g., 10 to 100 micrometers).

The individual thickness of each layer 82/84 in the shell 80 is up to 5 micrometers, but more typically will be on the order of an atomic thickness, such as up to 10 nanometers or from 2 to 5 angstroms. The thicknesses of the layers 82/84 may be equal, but in further examples is controlled in order to provide stoichiometric mullite (3Al₂O₃ 2SiO₂ or 2Al₂O₃ SiO₂) in the topcoat 70. For example, a molar ratio of a number of moles of alumina in the alumina layers 82 to a number of moles of silica in the silica layers 84 is approximately 1.5 (for 3Al₂O₃ 2SiO₂). Alternatively, a molar ratio of a number of moles of alumina in the alumina layers 82 to a number of moles of silica in the silica layers 84 is approximately 2 (for 2Al₂O₃ SiO₂). Thus, the thicknesses of the layers 82/84 is controlled with respect to the desired number of moles for the desired mullite formulation. In one example, the alumina layers 82 have a collective first thickness, the silica layers have a collective second thickness, and a ratio of the collective first thickness to the collective second thickness is 7:3. In another example, the ratio is 8:2.

The layers 82/84 are deposited onto the silicon carbide core particles 78 using a known technique, such as but not limited to, atomic layer deposition (ALD) or chemical vapor deposition (CVD). ALD is used for lower order layer thicknesses that are nanosized or lower, while CVD is used for higher, microsized thicknesses. ALD is a growth process in which a conformal thin film is deposited in a layer-by-layer fashion. For example, the silicon carbide core particles 78 are processed as a fluidized bed in a process chamber. A precursor is introduced to deposit a monolayer on the particle surfaces. The chamber is then purged with an inert gas to remove any unreacted precursor, and a second precursor is then introduced into the chamber. The second precursor reacts with the first precursor to create a monolayer of the desired film (alumina or silica, depending on the selected precursor chemistry) on the silicon carbide core particle 78. The chamber is then purged again and the process is repeated to grow the thickness of the film to the desired thickness, monolayer-by-monolayer.

CVD can be used to deposit thicker layers than thicknesses typical of ALD. CVD involves a reaction of a volatile precursor that is injected into a chamber under vacuum. The silicon carbide core particles 78 are processed as a fluidized bed in the chamber, which is heated to a reaction temperature that causes the precursor to react and form the desired coating material. The coating material bonds to the particle surfaces and builds-up over time to create a coating on the particle surfaces.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A thermal spray powder comprising:
composite powder particles (76), each of the composite powder particles (76) including
a silicon carbide core (78),
a shell (80) surrounding the silicon carbide core (78), the shell (80) being multi-layered and including at least one layer of silica (84) and at least one layer of alumina (82).

2. The thermal spray powder as recited in claim 1, wherein the at least one layer of silica (84) and the at least one layer of alumina (82) are in an alternating arrangement.

3. The thermal spray powder as recited in claim 1 or 2, wherein the at least one layer of silica (84) and the at least one layer of alumina (82) each have individual thicknesses of up to 10 nanometers.

4. The thermal spray powder as recited in any preceding claim, wherein the silicon carbide core (78) has a core diameter of 10 to 100 micrometers.

5. The thermal spray powder as recited in any preceding claim, wherein a molar ratio of a number of moles of alumina in the at least one layer of alumina (82) to a number of moles of silica in the at least one silica layer (84) is approximately 1.5.

6. The thermal spray powder as recited in any of claims 1 to 4, wherein a molar ratio of a number of moles of alumina in the at least one layer of alumina (82) to a number of moles of silica in the at least one silica layer (84) is approximately 2.

7. The thermal spray powder as recited in any preceding claim, wherein the at least one layer of alumina (82) defines a first thickness, the at least one layer of silica (84) defines a second thickness, and a ratio of the first thickness to the second thickness is 7:3.

8. The thermal spray powder as recited in any of claims 1 to 6, wherein the at least one layer of alumina (82) defines a first thickness, the at least one layer of silica (84) defines a second thickness, and a ratio of the first thickness to the second thickness is 8.

9. A gas turbine engine article (60) comprising:
a ceramic matrix composite (CMC) wall (61) having an interface region (64);
a silicon-containing bondcoat (68) on the CMC wall (61) in the interface region (64); and
a topcoat (70) on the silicon-containing bondcoat (68), the topcoat (70) including a mullite matrix (74) and silicon carbide particles (72) dispersed through the mullite matrix (74).

10. The gas turbine engine article as recited in claim 9, wherein the topcoat (70) has a composition, by weight percentage of the total weight of the topcoat (70), of 60 +/- 15% of the silicon carbide particles (72) and 40 +/- 15% of the mullite matrix (74).

11. The gas turbine engine article as recited in claim 9 or 10, wherein the topcoat (70) is in contact with the silicon bondcoat(68), and the silicon bondcoat (68) is in contact with the CMC wall (61).

12. The gas turbine engine article as recited in any of claims 9 to 11, wherein the mullite matrix (74) has a chemical formula 3Al₂O₃ 2SiO₂.

13. The gas turbine engine article as recited in any of claims 9 to 11, wherein the mullite matrix (74) has a chemical formula 2Al₂O₃ SiO₂.

14. The gas turbine engine article as recited in any of claims 9 to 13, wherein the silicon carbide particles (72) have a diameter of 10 to 100 micrometers.

15. A gas turbine engine (20) comprising:
a compressor section (24);
a combustor (56) in fluid communication with the compressor section (24); and
a turbine section (28) in fluid communication with the combustor (56), the turbine section (28) having an article (60) as recited in any of claims 9 to 14.
